Europäisches Patentamt

(19) European Patent Office

Office européen des brevets

(11) Veröffentlichungsnummer: **0 184 177**
**A2**

(12) **EUROPÄISCHE PATENTANMELDUNG**

(21) Anmeldenummer: 85115274.4

(22) Anmeldetag: 02.12.85

(51) Int. Cl.⁴: **B 62 D 31/00**
**B 62 D 61/06**

(30) Priorität: 05.12.84 DE 3444377

(43) Veröffentlichungstag der Anmeldung:
**11.06.86 Patentblatt 86/24**

(84) Benannte Vertragsstaaten:
**AT BE CH FR GB IT LI LU NL SE**

(71) Anmelder: **Huss, Heinrich**
**Liebigstrasse 1**
**D-6054 Rodgau 6(DE)**

(72) Erfinder: **Huss, Heinrich**
**Liebigstrasse 1**
**D-6054 Rodgau 6(DE)**

(74) Vertreter: **Rost, Jürgen, Dipl.-Ing. et al,**
**Patentanwälte Dipl.-Ing. Olaf Ruschke Dipl.-Ing. Hans E.**
**Ruschke Dipl.-Ing. Jürgen Rost Dipl.-Chem. Dr. U. Rotter**
**Pienzenauerstrasse 2**
**D-8000 München 80(DE)**

(54) **Karosserie.**

(57) Es wird eine Karosserie, insbesondere für ein Elektrofahrzeug als integriertes Metall-Kunststoff-Bauteil vorgeschlagen, welches einen schalenartigen, zum Aufsetzen
gegeneinander austauschbarer, entsprechend dem jeweils
gewünschten Verwendungszweck des Fahrzeuges ausgebildeter Aufbauten geeigneten Körper aus einem hochschlagfesten Kunststoffmaterial mit einem integrierten Metallchassis
umfaßt. Dabei weist der Körper bis auf eine Öffnung in
seinem vorderen Bereich einen durchgehenden, geschlossenen Boden auf; das Metallchassis weist eine Einrichtung auf,
mit welcher der Körper an einer Vorderradanordnung befestigt werden kann.

FIG.1

EP 0 184 177 A2

Karosserie

Die Erfindung betrifft eine Karosserie, insbesondere für
ein Elektrofahrzeug, dessen Räder wahlweise antreibbar
sind.

Bisher bekannte batteriegetriebene Fahrzeuge besitzen den
Nachteil nur sehr geringer Fahrleistung, und zwar sowohl
in Bezug auf ihren Aktionsradius pro Batterieladung als
auch in Bezug auf die erreichbare Höchstgeschwindigkeit.
Darüber hinaus sind sie aufwendig konstruiert und weisen
eine unverhältnismäßig hohe Masse auf, die insbesondere verursacht ist durch die äußerst schwere Ausführungsform derartiger Fahrzeuge, bei denen die Karosserie bzw. das Chassis
aus schweren Stahlteilen besteht und dadurch bedingte grosse Anzahl von schweren Batterien.

Die der Erfindung zugrundeliegende Aufgabe besteht darin, eine besonders pflegeleichte Karosserie der eingangs umrissenen Art anzugeben, welche die Fertigung eines insgesamt stabilen, und den Anforderungen der Straßenverkehrsordnung
entsprechenden Fahrzeuges gestattet, das hinsichtlich Be-

triebs- und Herstellungskosten sowie Fahrleistung und
Fahreigenschaften optimal ausgelegt ist und mit welchem
heutzutage auftretende gravierende Probleme wie beispielsweise Umweltverschmutzung und Lärmbelästigung auf einfachste
Weise gelöst werden können.

Diese Aufgabe wird erfindungsgemäß dadurch gelöst, daß
sie ein integriertes Metall-Kunststoff-Bauteil ist, welches
einen schalenartigen zum Aufsetzen gegeneinander austauschbarer, entsprechend dem jeweils gewünschten Verwendungszweck
des Fahrzeuges ausgebildeter Aufbauten geeigneten Körper
aus einem hochschlagfesten Kunststoffmaterial mit einem integrierten Metallchassis umfaßt, wobei der Körper bis auf
eine Öffnung in seinem vorderen Bereich einen durchgehenden,
geschlossenen Boden aufweist, wobei das Metallchassis eine
Einrichtung aufweist, mit welcher der Körper an einer steuerbaren Vorderradanordnung befestigbar ist.

Zweckmäßige Ausgestaltungen der erfindungsgemäßen integrierten Metall-Kunststoff-Karosserie ergeben sich aus den Unteransprüchen.

Mit der erfindungsgemäßen Konstruktion ist die Schaffung
eines Elektrofahrzeuges insbesondere mit drei Rädern möglich, welches sich als umweltfreundliches, wirtschaftliches,
verkehrssicheres und praktisches Verkehrsmittel auszeichnet, welches einen großen Aktionsradius und ein sehr gutes Beschleunigungsvermögen bei reduzierten Betriebskosten besitzt. Außerdem weist das so konstruierte Fahrzeug eine enorm lange Lebensdauer auf, wobei das Verhältnis Eigengewicht/Zuladung erheblich verbessert wird.

Praktische Versuche haben ergeben, daß ein Fahrzeug mit der erfindungsgemäßen Karosserie als Mehr-Sitzer oder Transporter inklusiv Batterien je nach Ausführung erheblich weniger als Vergleichsfahrzeuge wiegt, wobei die entsprechenden Leistungen sich in einer enormen Überlegenheit gegenüber allen bisher bekannten Elektrofahrzeugen ausdrücken läßt. Es ergibt sich auch ein außerordentlich günstiges Leistungsgewicht; beispielsweise verleiht ein Elektromotor von wenigen kW, der beispielsweise von mehreren handelsüblichen Batterien gespeist werden kann, dem Fahrzeug einen viel größeren Aktionsradius pro Energieinhalt der Batterien, als dies bei Fahrzeugen herkömmlicher Bauart möglich ist.

Durch die Verwendung eines hochschlagfesten, geschäumten bzw. tiefgezogenen Kunststoffmaterials mit dem Metallchassis, den vorgesehenen Verstrebungen und der umlaufenden Profilleiste ergibt sich eine äußerst verwindungssteife Karosserie, die auch Stoß- und Schlagbeanspruchungen standhält, bei welchen ein vergleichbares Kraftfahrzeug bereits erheblich beschädigt würde.

Bei Anwendung von Schäumtechnik umschließt die Kunststoffschaummasse das tragende Metallchassis mit Verstrebungen und Profilleiste vollkommen und tritt an Stelle von Innen-
und Außenschale, wobei in diesem Fall eingeschäumte Verlegerohre zur Aufnahme von elektrischen Leitungen, Kabelzügen u.dgl. vorgesehen sind.

Weitere Vorteile ergeben sich aus der nachfolgenden Erläuterung der Erfindung an einem Ausführungsbeispiel anhand der
beigefügten Zeichnung.

In der Zeichnung zeigen:

Fig. 1         eine Seitenansicht einer Karosserie,

Fig. 2         die Karosserie von oben gesehen,

Fig. 3         eine Teildraufsicht auf den hinteren Abschnitt des Fahrgestells mit Schwenkarm
               und Hinterrad,

Fig. 4         die besondere Anordnung der Hinterradaufhängung an der integrierten Karosserie.

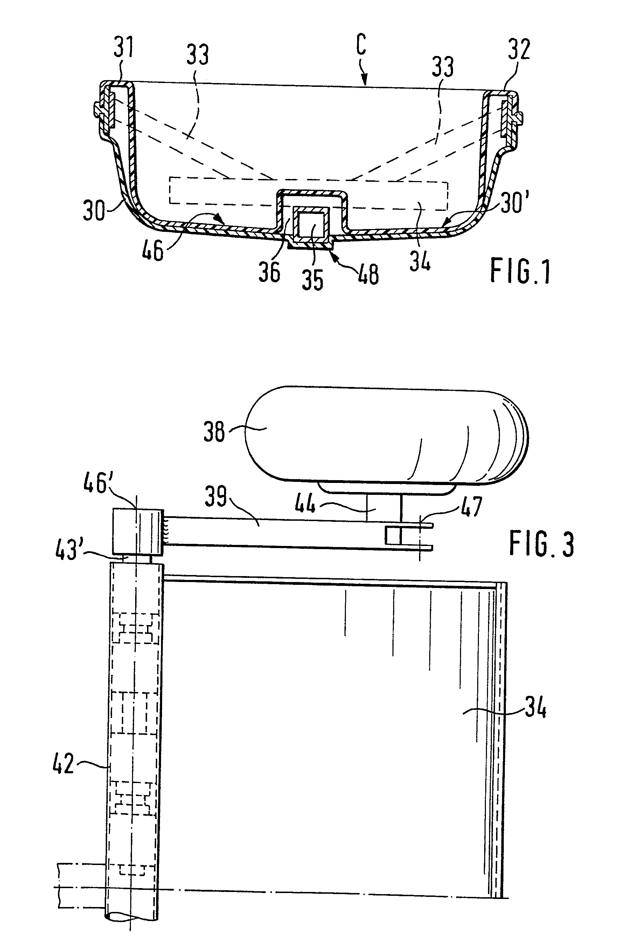

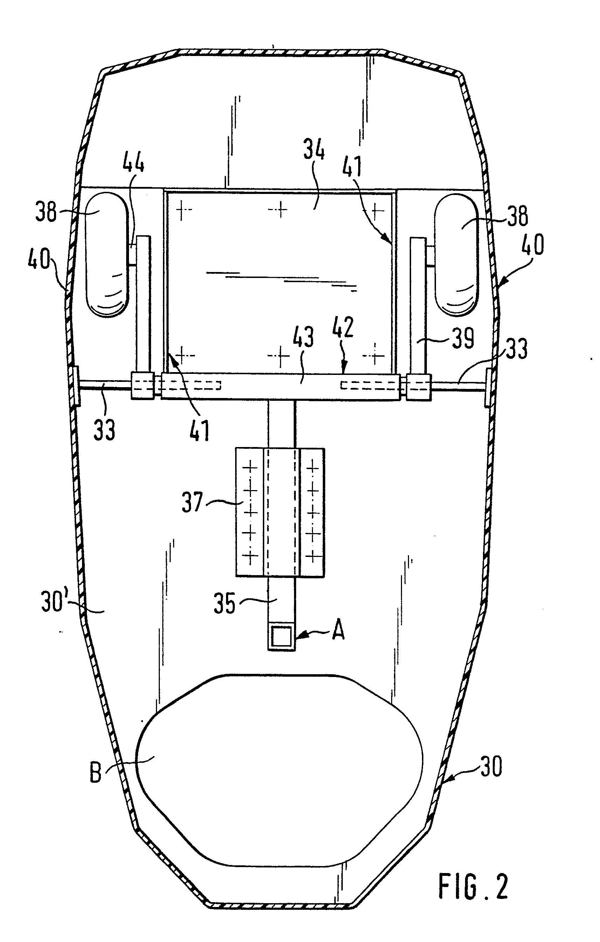

In Fig. 1 und 2 ist gezeigt, daß das Chassis, nämlich im
gezeigten Ausführungsbeispiel ein Metallträger, der aus
einer Stahlwanne bzw. einer wannenartigen Vertiefung 34
und einem daran angeschweißten Vierkantrohr 35 besteht,
mit einer Außenschale 30 aus einem hochschlagfesten Kunststoffmaterial und mit einer zugeordneten Innenschale 31
kombiniert ist, die aus dem gleichen Material wie die Aussenschale 30 besteht. Im Falle der Schäumtechnik sind Innenschale 31 und Außenschale 30 durch einen geschäumten Körper ersetzt, insbesondere ist über einen wesentlichen Bereich längs der Bodenmitte der Außenschale 30 eine Vertiefung 48 vorgesehen, in welcher das Rohr 35 ruht, das seinerseits über ein U-Blech 37 mit der Oberfläche der Außenschale 30 durch zweckmäßige Verbindungstechnik fest verbunden,
beispielsweise verschweißt oder vernietet ist. Die zwischen
dem Profilblech 37 und einem Wellenstück 43 gelegte Schnittansicht nach Fig. 1 läßt weiter erkennen, daß die Ränder der
beiden Schalen bzw. des geschäumten TEils 30, 31 zusammenwirken und miteinander über eine Aluminiumprofilleiste 32
verbunden sind. Diese Aluminiumprofilleiste läuft vollständig um den Fahrzeugaufbau und begrenzt dessen Umfang; sie
weist auch eine Einrichtung zum Halten von Zierleisten und/
oder Gummipolsterstreifen auf.

In Fig. 2 ist die Außenschale 30 gezeigt, die unterhalb der
Innenschale 31 angeordnet ist und aus einem Kunststoffmaterial gezogen ist, wobei der horizontale Umriss dieser Wanne
30 bzw. des Schäumkörpers dem Umfangsprofil des so ausgerüsteten Fahrzeuges entspricht. Diese Schale weist einen
durchgehenden Boden 30' auf, wobei im vorderen Bereich eine
Öffnung B freigelassen ist, durch welche eine die Lenkmechanik, die Vorderradaufhängung und den Vorderradantrieb aufweisende Einheit geführt werden kann. Die Baueinheit, die
in der Patentanmeldung (P ............ ) erläutert ist,
wird an dem freien nicht horizontal verlaufenden Endabschnitt A des Rohres 35 befestigt.

An der Stahlwanne bzw. der wannenartigen Vertiefung 34 sind
im vorderen Querabschnitt versteifende Verstärkungsstreben
33 und ein Achsrohr 43 zur Aufnahme der beiden Steckachsen
43' angeschweißt. Die Streben 33 erstrecken sich dabei bis
zur Profilleiste, über welche sie mit der Außenschale 30
bzw. dem Schäumkörper fest verbunden bzw. integriert sind
und zur Erhöhung der Verwindungssteifigkeit der gesamten Anordnung beitragen. Insbesondere ist, wie dies in Fig. 1
deutlich gezeigt ist, der Boden der Innenschale 31 bzw. die
untere Schäumkörperseite durch einen nach unten geöffneten
Tunnel 36 versteift, von welchem nicht nur das Rohr 35, sondern auch gegebenenfalls die elektrischen Versorgungsleitungen
und Bremszüge aufgenommen werden können.

Die über der Außenschale angeordnete Innenschale weist an
ihren vorderen Seitenbereichen und auch am Heck Aussparungen
zur Aufnahme, Einklemmen und zum Halten der erforderlichen
Beleuchtungs-, Positionsangabe- und Bremslichtkörper auf,
die somit äußerst schnell zu montieren sind und bei Beschädigung auch auf einfache Weise ausgetauscht werden können,
wobei Befestigungsmittel entfallen.

0184177

Wie in Fig. 2 gezeigt ist, sind in dem Bereich der Hinterräder 38 in der Außenschale bzw. im Schaumkörper Radkästen
ausgebildet, die bei 40 stilisiert dargestellt sind und innere Seitenwände 41 formen, so daß sich eine Vertiefung in
der Außenschale bzw. im Schaumteil ergibt, in welcher die
Metallwanne bzw. die wannenartige Vertiefung 34 festgelegt
bzw. im Schaumkörper eingebettet ist. Diese wannenartige Vertiefung 34 ist nach Fig. 1 ihrerseits von einem wannenförmigen mit der Innenschale einstückigen Formteil bedeckt, welches als Aufnahme für die Batterien dient, die zum Betrieb
des Elektrofahrzeuges erforderlich sind. Die angeordneten
Batterien, die auch in einem gemeinsamen Behälter vorgesehen
sein können, speisen an zweckmäßigen Stellen vorgesehene Elektromotoren, die ihrerseits über ein entsprechendes Getriebe
beispielsweise Zahnkettengetriebe (nicht gezeigt) entweder
das Vorderrad und/oder ein oder beide Hinterräder antreiben.

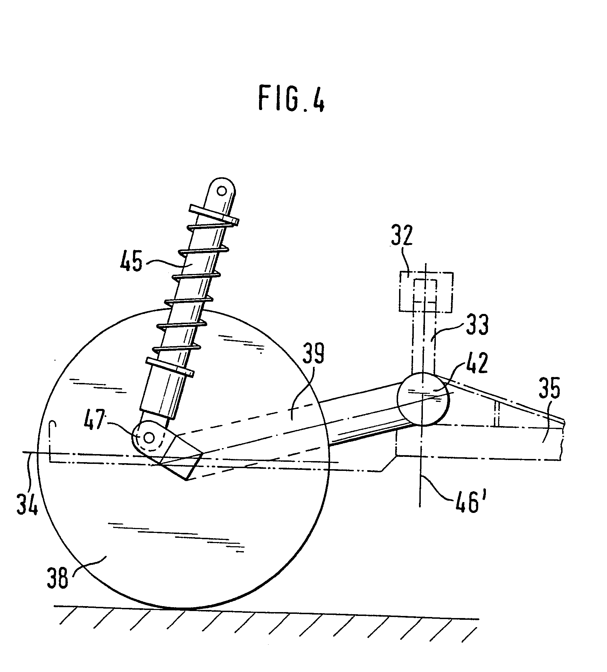

Diese Hinterräder 38 mit ihrem Schwenkarm sind, wie dies aus
Fig. 2 bis 4 sich ergibt, an dem Achsrohr 43 angelenkt. Zu
diesem Zweck ist beiderseits des Achsrohres je eine Steckachse 43' (Fig. 3) eingepreßt, mit welcher ein Schwingarm 39
verbunden ist, der das Hinterrad 38 mit dessen Radnabe 44
drehbar aufnimmt. Dieser Schwingarm 39 weist an seinem freien Ende eine Aufnahme 47 auf, an welcher ein

Federbein 45 angelenkt ist, das mit seinem anderen Ende wiederum an dem schalenartigen Körper C
befestigt ist. Damit kann die Schwinge 39 um die Schwenkachse

**0184177**

46 schwenken und das Federbein 45 komprimieren oder ausdehnen, so daß entsprechende während des Fahrens auftretende
Schwingungen abgefedert und gedämpft werden.

Erfindungswesentlich ist neben dem Aufbau unter Verwendung
der beiden zusammenwirkenden Kunststoffschalen bzw. des
Schaumkörpers mit integriertem Stahlrahmen die Positionierung
der wannenartigen Vertiefung 34, wie dies nachfolgend erwähnt ist.

Durch die Anordnung der Batterien zwischen der Rotationsachse, den Hinterrädern und dem Achsrohr 43 und durch den
tiefliegenden Schwerpunkt der Batterien wird das Fahrverhalten wesentlich verbessert, wobei die Batterien auch bei
beispielsweise durch Auffahrunfälle verursachtem negativem
Beschleunigen in ihrer Position verbleiben. Die mehrwendige
Aufnahme für die Batterien ist deshalb vorteilhaft, weil sie
das Gewicht in das Chassis einleitet, und darüber die Kunststoffwanne der oberen Innenschale vorgesehen sind, welche
zwar auch Kräfte aufnimmt, jedoch das Fahrzeug elektrisch
von den Batterien isoliert und es notfalls von den aggressiven Säuren der Batterien abschirmt. Die Batterien sind hier
durch Hochklappen eines am Körper C angelenkten Deckels
leicht zugänglich, der seinerseits isoliert ist.

Es ist eine doppelte Hinterradfederung vorgesehen, um ein

- 9 -      **0184177**

Dämpfen auf zwei verschiedene Weisen zu erreichen:

1. durch eine Torsionsfederung unter Verwendung von jeweils zwei oder mehreren Gummielementen in dem Achsrohr 43,

2. durch die Federbeine, welche je am freien Ende des Schwingarms angreifen und deren Abstützpunkte variabel sind.

Gegen Überbelastung ist ein Schutz durch beidseitige Hartgummidome als Anschlag vorgesehen, welche den Federweg der Schwingarme entsprechend begrenzen.

Durch die optimale Unterbringung der Batterien wird der Fahrzeugschwerpunkt so weit nach hinten verlegt, daß der Hauptanteil der Bremskraft auf die bremsenden Hinterräder wirkt, so daß sich eine optimale Spurtreue des Fahrzeuges und ein erheblich verkürzter Bremsweg ergibt.

Das Übertragen von Kräften vom Chassis (Metallträger) in die Ober- und Unterschale bzw. in den Schäumkörper erfolgt über die rund um das Fahrzeug geführte Leichtmetallprofilleiste, über das zentrale U-Profilblech 37 und über die Streben 33, wobei gewünschtenfalls zur Erhöhung der Versteifung weitere Verstärkungsstreben vorgesehen sein können.

Ganz wesentlich ist die Ausbildung der Schalen aus einem leichtgewichtigen hochschlagfesten Kunststoffmaterial, bzw. des integrierten Schäumkörpers mit geschlossener Oberfläche an Stelle von Außen- und Innenschale, welche beispielsweise bei Unfällen verursachte Kräfte von funktionswichtigen Teilen des Fahrzeuges abschirmen. Schwingungen, welche auf das Fahrzeug wirken, werden weiterhin durch die Einzelradaufhängung gedämpft.. Die Scheinwerfermontage erfolgt ohne Verwendung komplizierter Befestigungselemente, weil diese Bauteile in der Oberschale eingebettet und dort verklemmt werden, was äußerst zeitsparend und einfach ist.

Selbstverständlich ist es erfindungsgemäß ganz wesentlich und ein großer Vorteil, daß die Karosserie mit verschiedenen, dem jeweiligen Verwendungszweck des Elektrofahrzeuges angepaßten Aufbauten ausgerüstet werden kann. Beispielsweise lassen sich auf die Karosserie ein offenes, ein geschlossenes Führerhaus, offene oder geschlossene Ladepritschen, ein offener oder ein geschlossener Aufbau zur Personenbeförderung oder Warentransport und dergleichen aufsetzen und gegeneinander austauschen, wobei keine besonderen Befestigungsvorrichtungen erforderlich sind, weil alle Aufbauten oder Aufsätze formschlüssig mit der Karosserie in Eingriff stehen. So läßt sich das Elektrofahrzeug besonders vorteilhaft je nach Aufbau als Kleinbus, als Transporter, als Müllabfuhrauto o.dgl. einsetzen, wobei sein Umrüsten auf einen anderen Einsatzzweck ohne Zuhilfenahme von technisch aufwendigen Mitteln und ohne großen Zeitverlust erfolgt und dabei kein Fachmann erforderlich ist.

Dabei wird der Karosserie ein einwärts geneigter aufragender vorderer Aufbau, welcher Armaturenbrett, Windschutzscheibe und die für den Betrieb des Fahrzeuges erforderlichen Armaturen umfaßt, zugeordnet.

Ein weiterer Vorteil ergibt sich dadurch, daß die beschriebene Karosserie auch für Fahrzeuge mit Hinterradantrieb einsetzbar ist. Durch Einsetzen eines zusätzlichen Kunststoffprofilteiles läßt sich auch unter der Vorderhaube Gepäckraum schaffen. Bei allen Antriebsarten des Fahrzeuges entfällt ein teures und schweres Differential. Es lassen sich mehrere voneinander unabhängige Antriebssteuerkreise verwenden. Für jedes Rad kann eine eigene und unabhängige Antriebseinheit vorgesehen sein.

Aufgrund der Gesamtleichtbauweise der Karosserie ergibt sich weiterhin ein geringerer Bedarf an Batteriekapazität.

Hieraus ergibt sich ein geringerer Energieverbrauch bei gleicher Geschwindigkeit und gleichem Aktionsradius des Fahrzeuges.

Die gesamten Batterien befinden sich in einem separaten mobilen Behälter, der es gestattet, mit einem Hebezeug den entladenen Batteriesatz durch einen aufgeladenen neuen Satz zu ersetzen.

Hierdurch lassen sich die Stillstandszeiten sehr stark
herabsetzen, so daß die Betriebsdauer verdoppelt werden
kann.

Darüber hinaus sind je zwei voneinander unabhängige Bremskreise und Stromversorgungskreise (Notstromversorgung mit
der Beleuchtung sowie Antrieb) vorgesehen.

Pienzenauerstraße 2
8000 München 80
Telefon: (089) 98 03 24,
98 72 58, 98 88 00
Telecopy Gr. II: (089) 222 066
Kabel: Quadratur München
Telex: 522 767 rush d

**BERLIN**
Kurfürstendamm 182/183
1000 Berlin 15
Telefon: (0 30) 8 83 70 78/79
Kabel: Quadratur Berlin

## RUSCHKE & PARTNER
## ANWALTSSOZIETÄT

– 1 –

D.pl.-Ing. hans E. Ruschke
Dipl.-Ing. Claf Ruschke'
Dipl.-Ing. Jürgen Post
Dipl.-Chem. Dr. Ulrich Rotter
Patentanwälte
Zugelassen beim Europäischen Patentamt
Admitted to the European Patent Office
' in Berlin

Rainer Schulenberg
Rechtsanwalt
Zugelassen bei den LG München I und II,
beim OLG München und dem
Bayer. Obersten Landesgericht

München, den 2. Dezember 1985

meine Akte: RH 17385

Heinrich Huss, D 6054 Rodgau 6, Liebigstr.1

## Ansprüche

1.      Karosserie, insbesondere für ein Elektrofahrzeug, dessen Räder wahlweise antreibbar sind, dadurch  g e - k e n n z e i c h n e t , daß sie ein integriertes Metall-Kunststoff-Bauteil ist, welches einen schalenartigen, zum Aufsetzen gegeneinander austauschbarer, entsprechend dem jeweils gewünschten Verwendungszweck des Fahrzeuges ausgebildeter Aufbauten geeigneten Körper (C) aus einem hochschlagfesten Kunststoffmaterial mit einem integrierten Metallchassis (34, 35) umfaßt, und daß der Körper (C) bis auf eine Öffnung in seinem vorderen Bereich einen durchgehenden, geschlossenen Boden (30') aufweist, wobei das Metallchassis eine Einrichtung aufweist, mit welcher der

0184177

Körper (C) an einer steuerbaren Vorderradanordnung befestigbar ist.

2.      Karosserie nach Anspruch 1, dadurch g e k e n n - z e i c h n e t , daß der Körper eine Außenschale (30) und eine darauf aufgesetzte Innenschale (31) umfaßt, deren Umfangsräder sich überlappen und mit Hilfe einer umlaufenden Profil-Leiste (32) untereinander fest verbunden sind.

3.      Karosserie nach Anspruch 1, dadurch g e k e n n - z e i c h n e t , daß das tragende Metallchassis (34, 35) und eine umlaufende Profilleiste (32) unter Anwendung der Schäumtechnik im wesentlichen von den schalenartigen Körper bildenden  Kunststoff-Schaummasse umschlossen ist.

4.      Karosserie nach einem der Ansprüche 2 und 3, dadurch g e k e n n z e i c h n e t , daß die Profilleiste (32) aus einem Leichtmetall besteht.

5.      Karosserie nach Anspruch 1 bis 3, dadurch g e - k e n n z e i c h n e t , daß der schalenartige Körper (C) eine Öffnung (B) für die Aufnahme eines die Lenkmechanik, den Antrieb und die Vorderradaufhängung umfassenden Blockes und in seinem rückwärtigen Seitenbereich ausgeformte mit ihm einstückige Radkästen (40, 40) zur Aufnahme der Hinterräder (38) aufweist.

0184177

6.    Karosserie nach Anspruch 1 und 2, dadurch g e -
k e n n z e i c h n e t , daß die Außenschale (30) mit
dem Metallchassis und einem damit einstückigen Rohr (35),
dessen nicht horizontaler Endabschnitt (A) zum Anschluß
an die Vorderrad-Einrichtung dient, umgreifendes und an
dem Boden der Außenschale (30) befestigtes Profilblech
(37) starr verbunden ist.

7.    Karosserie nach einem der Ansprüche 1 bis 2, dadurch g e k e n n z e i c h n e t , daß innere Seitenflächen (41, 41) der Radkästen der Bodenschale als Anlage für
eine wannenartige Vertiefung (34) des Chassis im Batteriebereich zur Aufnahme des in der Innenschale an entsprechender Stelle vorgesehenen Batteriekastens dienen, und daß sich
vom von der vorderen Querwand (42) der Vertiefung (34) Verstärkungsstreben (33) zum jeweiligen Außenrand erstrecken
und mit ihr über die Profilleiste (32) verbunden sind.

8.    Karosserie nach Anspruch 1 und 3, dadurch g e -
k e n n z e i c h n e t , daß in dem schalenartigen Körper
(C) eine abdeckbare Aufnahme für die Batterien vorgesehen
ist, welche mit Isolierstoff ausgerüstet ist.

9.    Karosserie nach einem der Ansprüche 1 bis 8, dadurch g e k e n n z e i c h n e t , daß die Innenschale
bzw. Innenseite des geschäumten Karosseriekörpers im mittleren Bodenbereich mindestens eine als Stauraum dienende, von Personensitzen abdeckbare und Antriebsaggregate
für wenigstens ein Hinterrad und weitere gewünschte Betriebseinrichtungen aufnehmende Vertiefung aufweist, und
daß an ihrem vorderen und rückwärtigen äußeren Seitenbereich
Aussparungen zur Aufnahme einer Blink- und Scheinwerferanlage vorgesehen sind.

10.    Karosserie nach einem der vorhergehenden Ansprüche,
dadurch g e k e n n z e i c h n e t , daß mit den Batterien ein Ladegerät gekoppelt ist.

11.    Karosserie nach einem der Ansprüche 1 bis 8, dadurch
g e k e n n z e i c h n e t , daß in dem Batteriekasten ein
sämtliche Batterien aufnehmender und entfernbarer Behälter
vorgesehen ist.

12.    Karosserie nach einem der vorhergehenden Ansprüche,
dadurch g e k e n n z e i c h n e t , daß die vordere
Querwand (42) der wannenartigen Vertiefung (34) des Metallchassis ein an ihr befestigtes Achsrohr mit Gummielementen
(43) zum wartungsfreien Aufnehmen und Lagern von zwei Steckachsen (43') einschließt, an welchen je ein Schwingarm (39)
befestigt ist, der seinerseits die Nabe (44) eines Hinterrades drehbar lagert und mit seinem freien Ende an einem
Federbein (45) angelenkt ist, das seinerseits an dem verstärkten Seitenrandbereich der Karosserie verbunden ist.

13. Karosserie nach Anspruch 12, dadurch g e k e n n -
z e i c h n e t , daß der Federweg der Schwingarme (39)
durch Anschläge begrenzt ist.

14. Karosserie nach einem der vorhergehenden Ansprüche,
dadurch g e k e n n z e i c h n e t , daß der Raum zur
Aufnahme der Batterien in Fahrtrichtung gesehen hinter
der Schwenkachse (46) der Schwingarme (39) liegt.

15. Karosserie nach Anspruch 1, dadurch g e k e n n -
z e i c h n e t , daß der auf die Karosserie aufsetzbare
Aufbau eine offene oder geschlossene Ladepritsche ist.

16. Karosserie nach Anspruch 1, dadurch g e k e n n -
z e i c h n e t , daß der auf die Karosserie aufsetzbare
Aufbau ein offenes oder geschlossenes Führerhaus ist.

17. Karosserie nach Anspruch 1, dadurch g e k e n n -
z e i c h n e t , daß der auf die Karosserie aufsetzbare
Aufbau ein Behälter ist.

18. Karosserie nach Anspruch 1, dadurch g e k e n n -
z e i c h n e t , daß der auf die Karosserie aufsetzbare
Aufbau ein Personensitze aufweisender, geschlossener oder
offener Aufsatz ist.

19.    Karosserie nach einem der Ansprüche 1 bis 2, dadurch g e k e n n z e i c h n e t , daß der Boden (46) der Innenschale (31) in der Mitte durch einen nach unten offenen, im Querschnitt U-förmigen Tunnel (36) versteift ist, welcher gleichzeitig als Aufnahme des an der darunterliegenden Außenschale befestigten Längsträgers in der Form eines Rohres (35) dient.

FIG.1

FIG.3

0184177

FIG.2

0184177

FIG.4